# EUROPEAN PATENT APPLICATION

(11) **EP 1 878 929 A1**
(43) Date of publication of application: **16.01.2008**
(21) Application number: 06731956.6
(22) Date of filing: 17.04.2006
(51) Int. Cl.: F16C 19/20, F16C 19/06, F16C 19/10, F16C 19/16, F16C 33/32, F16C 33/38

(54) **ROLLING BEARING**

(30) Priority: 18.04.2005 JP 2005119703
(71) Applicant: JTEKT Corporation, Osaka-shi Osaka 542-8502 (JP)
(72) Inventor: UENO, Hiroshi, c/o JTEKT Corporation, Osaka-shi, Osaka 5428502 (JP); MATSUYAMA, Hiroki, c/o JTEKT Corporation, Osaka-shi, Osaka 5428502 (JP)
(74) Representative: HOFFMANN EITLE
(86) International application number: PCT/JP2006/308027
(87) International publication number: WO 2006/112432

(57) **Abstract**

A diameter of each first ball 3 is set larger than a diameter of each second ball 4. Under action of a radial load not more than a first radial load, the first balls 3 are in contact with a raceway groove 18 of an outer ring 1 and a raceway groove 19 of an inner ring 2, while the second balls 4 are in contact with none of the raceway groove 18 of the outer ring 1 and the raceway groove 19 of the inner ring 2. Also, under action of a radial load not less than a second radial load which is larger than the first radial load, both the first balls 3 and the second balls 4 are in contact with both the raceway groove 18 of the outer ring 1 and the raceway groove 19 of the inner ring 2. The first balls 3 and the second balls 4 are positioned in pockets 10, 11 of the cage 7 alternately along a circumferential direction of the cage 7.

## Description

### TECHNICAL FIELD

The present invention relates to a rolling bearing having rolling elements and, in particular, to a rolling bearing suitable for use as a wheel bearing for vehicles.

### BACKGROUND OF THE INVENTION

As a rolling bearing, there has conventionally been provided a ball bearing described in JP 7-19248 A.

This ball bearing has an outer ring, an inner ring, a cage, first balls and second balls. Then, the outer diameter of the first balls is set slightly larger than the outer diameter of the second balls. The first balls and the second balls are positioned in pockets of the cage positioned between the outer ring and the inner ring.

In this conventional ball bearing, by setting the outer diameter of the first balls slightly larger than the outer diameter of the second balls, the revolving speed of the first balls and the revolving speed of the second balls are set different from each other. Thus, during operation of the bearing, circumferential positions of the first balls and the second balls in the pockets of the cage are set opposite to each other so as to suppress rattling of the cage against the rolling elements, thereby providing for suppression of abnormal noise.

However, in the conventional ball bearing, since the first balls and the second balls are to be in contact with at least one of the raceway surface of the inner ring and the raceway surface of the outer ring, regardless of the magnitude of an acting load, posing a problem of a larger rotating torque. This leads to a problem that automobiles or machine tools or the like including the above-described conventional ball bearing take higher running cost.

### SUMMARY OF THE INVENTION

Accordingly, an object of the present invention is to provide a rolling bearing which involves smaller rotating torque.

In order to achieve the above object, the present invention provides a rolling bearing comprising:
an outer ring having a raceway surface;
an inner ring having a raceway surface;
first rolling elements which are placed between the raceway surface of the outer ring and the raceway surface of the inner ring and each of which has a first diameter;
second rolling elements which are placed between the raceway surface of the outer ring and the raceway surface of the inner ring and each of which has a second diameter smaller than the first diameter; and
a cage for holding the first rolling elements and the second rolling elements, wherein
under action of a load not more than a first load, the first rolling elements are in contact with both the raceway surface of the outer ring and the raceway surface of the inner ring, while the second rolling elements are separate from both the raceway surface of the outer ring and the raceway surface of the inner ring, and wherein
under action of a load not less than a second load which is larger than the first load, both the first rolling elements and the second rolling elements are in contact with both the raceway surface of the outer ring and the raceway surface of the inner ring.

It is assumed that the diameter herein refers to a diameter of each ball given that the rolling elements are balls, a diameter of an end face of each cylindrical roller given that the rolling elements are cylindrical rollers, and a diameter of a larger-diameter side end face of each tapered roller given that the rolling elements are tapered rollers.

In this invention, under action of a load not more than a first load, the first rolling elements are in contact with both the raceway surface of the outer ring and the raceway surface of the inner ring, while the second rolling elements are in contact with neither the raceway surface of the outer ring nor the raceway surface of the inner ring. Therefore, under action of a load not more than the first load, the number of rolling elements being in contact with the raceway surfaces of the inner and outer rings can be reduced by the number of the second rolling elements. Accordingly, since the number of rolling elements, which are a generation source for dynamical friction against the raceway surfaces of the inner and outer rings, is lessened under the action of a load not more than the first load, the rotating torque of the rolling bearing can be reduced to a great extent in that state, so that the running cost for automobiles, machine tools or the like including the rolling bearing of the invention can be reduced to a great extent.

According to this invention also, with action of a load not less than the second load, the load can be shared and borne by both the first rolling elements and the second rolling elements. Therefore, with action of a load not less than the second load, since the load can be shared and borne by the first rolling elements and the second rolling elements, the rolling bearing can be increased in load capacity.

A rolling bearing of an embodiment further comprises third rolling elements each of which has a third diameter smaller than the second diameter, wherein
the cage holds the third rolling elements, and
the third rolling elements are in contact with both the raceway surface of the outer ring and the raceway surface of the inner ring under action of a load not less than a third load which is larger than the second load, and are not in contact with at least one of the raceway surface of the outer ring and the raceway surface of the inner ring under action of a load smaller than the third load.

In this embodiment, since three or more types of rolling elements which are different in size from one another are included, the number of rolling elements that bear a load can be varied roughly in three or more steps depending on the magnitude of the acting load. Therefore, since the number of rolling elements that bear a load can be varied in small steps depending on the magnitude of the acting load, the area where the first rolling elements alone bear the load can be made smaller. Thus, the service life of the first rolling elements that bear the load at all times during operation can be prolonged, so that the service life of the rolling bearing can be prolonged. Also, since the number of rolling elements that bear the load can be varied roughly in three or more steps, the rotating shaft on which the rolling bearing is mounted can be stably supported.

In am embodiment, the cage holds the first rolling elements and the second rolling elements alternately along a circumferential direction of the cage.

In this embodiment, the cage holds the first rolling elements and the second rolling elements alternately along the circumferential direction of the cage, where the first rolling elements that are the larger in diameter are positioned at equal intervals along the circumferential direction. Therefore, with a load borne, part of the inner ring and the outer ring can be prevented from being locally largely deformed, so that a smooth revolutionary motion of the rolling elements can be performed. Accordingly, the rolling bearing can be increased in load capacity.

In the rolling bearing of this invention, under action of a load not more than a first load, the first rolling elements are in contact with both the raceway surface of the outer ring and the raceway surface of the inner ring, while the second rolling elements are in contact with neither the raceway surface of the outer ring nor the raceway surface of the inner ring. Therefore, under action of a load not more than the first load, the number of rolling elements being in contact with the raceway surfaces of the inner and outer rings can be reduced by the number of the second rolling elements. Accordingly, the rotating torque can be reduced to a great extent and the running cost for automobiles, machine tools or the like including the rolling bearing of the invention can be reduced to a great extent.

According to this invention also, with action of a load not less than the second load, the load can be shared and borne by both the first rolling elements and the second rolling elements. Therefore, with action of a load not less than the second load, since the load can be shared and borne by the first rolling elements and the second rolling elements, the rolling bearing can be increased in load capacity.

### BRIEF DESCRIPTION OF THE DRAWINGS

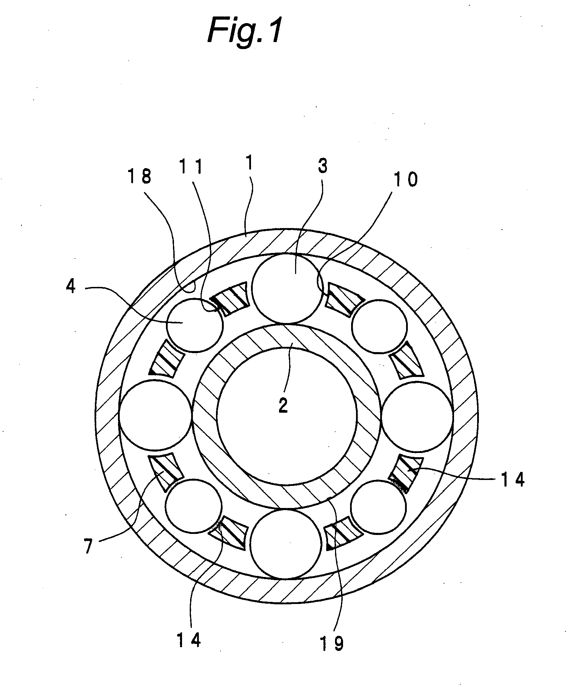

Fig. 1 is a radial sectional view of a ball bearing which is one embodiment of the rolling bearing of the present invention.

### DETAILED DESCRIPTION OF THE INVENTION

Hereinbelow, the present invention will be described in detail by embodiments thereof illustrated in the accompanying drawing.

Fig. 1 is a radial sectional view of a ball bearing which is one embodiment of the rolling bearing of the present invention.

The ball bearing is designed to bear a radial load. The ball bearing includes an outer ring 1, an inner ring 2, first balls 3 as an example of first rolling elements, second balls 4 as an example of second rolling elements, and a cage 7 for holding the first balls 3 and the second balls 4.

The outer ring 1 has a deep groove-type raceway groove 18 as an example of a raceway surface on an inner circumference. The inner ring 2, on the other hand, is fixed to an axle (not shown). The inner ring 2 has a deep groove-type raceway groove 19 as an example of a raceway surface on an outer circumference.

The cage 7 is placed between the outer ring 1 and the inner ring 2. The cage 7 is composed of a first annular portion (not shown), a second annular portion (not shown), and eight pillar portions 14 for coupling the first annular portion and the second annular portion to each other. The first annular portion, the second annular portion and every two pillar portions adjoining each other in the circumferential direction of the cage 7 define a pocket in combination. In this embodiment, pockets are provided in two types, where each of first pockets 10 has an opening area larger than that of each of second pockets 11.

The diameter of the first balls 3 is larger than the diameter of the second balls 4. In Fig. 1, the difference between the diameter of the first balls 3 and the diameter of the second balls 4 is depicted with some exaggeration for an easier understanding. The first balls 3 are housed in the first pockets 10 of the cage 7, and the second balls 4 are housed in the second pockets 11 of the cage 7. The cage 7 restricts a radial moving range of the first balls 3 to within a specified range, and moreover restricts a radial moving range of the second balls 4 to within a specified range.

As shown in Fig. 1, a sum of the number of the first pockets 10 and the number of the second pockets 11 is an even number, and the first balls 3 and the second balls 4 are positioned alternately along the circumferential direction of the cage 7.

In this ball bearing, while the ball bearing is under action of a load not more than a first radial load which is an example of a first load, the first balls 3 are to be kept in contact with both the raceway groove 18 of the outer ring 1 and the raceway groove 19 of the inner ring 2, while the second balls 4 are to be held in the air by the cage 7 so as to be in contact with none of the raceway groove 18 of the outer ring 1 and the raceway groove 19 of the inner ring 2.

That is, with action of a load not more than the first radial load, the second balls 4 are in a suspended state between the outer ring 1 and the inner ring 2, so that the radial load acting on the ball bearing is borne only by the first balls 3.

On the other hand, when this ball bearing comes under action of a radial load not less than a second radial load which is an example of a second load larger than the first radial load, the outer ring 1 and the inner ring 2 are deformed, causing the radial clearance of the second balls 4 to be equal to zero or below zero (i.e., a zero clearance or a negative clearance). Thus, the second balls 4 also come into contact with both the raceway groove 18 of the outer ring 1 and the raceway groove 19 of the inner ring 2 so as to share and bear the load acting on the ball bearing.

According to the ball bearing of this embodiment, under action of a radial load not more than the first radial load, the first balls 3 are brought into contact with both the raceway groove 18 of the outer ring 1 and the raceway groove 19 of the inner ring 2, while the second balls 4 are in contact with none of the raceway groove 18 of the outer ring 1 and the raceway groove 19 of the inner ring 2. Therefore, under action of a radial load not more than the first radial load, the rolling elements to be brought into contact with the raceway grooves 18, 19 of the outer and inner rings 1, 2 can be restricted to the first balls 3 alone, so that the number of rolling elements in contact with the raceway grooves 18, 19 of the outer and inner rings 1, 2 can be reduced to an extent corresponding to the number of the second balls 4 under action of a load not more than the first load. Accordingly, under action of a load not more than the first load, since the number of rolling elements, which are a source of dynamical friction against the raceway grooves 18, 19 of the outer and inner rings 1, 2, becomes smaller, the rotating torque can be reduced to a considerable extent in this state, so that operating cost for automobiles or machine tools or the like including the ball bearing of this embodiment can be reduced to a considerable extent.

Further, according to the ball bearing of this embodiment, with action of a load not less than the second load, the load can be shared and borne by both the first balls 3 and the second balls 4. Therefore, with action of a load not less than the second load, the load can be shared and borne by the first balls 3 and the second balls 4, thus allowing the load capacity to be increased.

Furthermore, according to the ball bearing of this embodiment, the cage 7 holds the first balls 3 and the second balls 4 alternately along the circumferential direction of the cage 7, so that the first balls 3 having the largest diameter are positioned in plurality at equal intervals along the circumferential direction. Therefore, with a radial load borne, part of the outer ring 1 and the inner ring 2 can be prevented from being locally largely deformed, so that a smooth revolutionary motion of the first balls 3 and the second balls 4 can be performed. Accordingly, the ball bearing can be increased in load capacity.

In addition, in the ball bearing of this embodiment, it is arranged that the cage 7 restricts the radial moving range of the first balls 3 to within a specified range, and moreover restricts the radial moving range of the second balls 4 to within a specified range. However, in this invention, it is also allowed that two pillar portions that define each of the second pockets, which are the smaller in opening area, are held normally in contact with the second balls, so that each of the second balls is sandwiched by the two pillar portions from circumferential both sides of the cage so as to be restrained in the circumferential direction. Further, in addition to this restraint in the circumferential direction, it is also allowable that the first annular portion and the second annular portion, which define the second pockets, are held normally in contact with the second balls so that the second balls are sandwiched by the first annular portion and the second annular portion from axial both sides of the cage to thereby restrain the second balls in the axial direction. In this way, the second balls and the cage may also be prevented from being moved relative to each other in the circumferential and axial directions.

Furthermore, in the ball bearing of this embodiment, the rolling elements are provided by the first balls 3 and the second balls 4 smaller in diameter than the first balls 3. However, in this invention, the rolling elements may also be provided by three or more types of balls which are different in diameter from one another.

For example, in the case where the rolling elements are provided by three types of balls different in diameter from one another, i.e. first balls, second balls smaller in diameter than the first balls, and third balls smaller in diameter than the second balls, it is set that a radial load, when not more than a first radial load, is borne only by the first balls, a radial load, when not less than a second radial load larger than the first radial load, is borne only by the first balls and the second balls, and a radial load, when not less than a third radial load larger than the second radial load, is borne by all of the first balls, the second balls and the third balls.

Thus, when the rolling elements are provided by three types of balls different in size from one another, the number of balls that bear a load can be varied roughly in three steps depending on the magnitude of an acting load. Accordingly, since the number of balls that bear a load can be varied in small steps depending on the magnitude of an acting load, the area where the first balls alone bear the load can be made smaller. Thus, the service life of the first balls that bear a load at all times during operation can be prolonged, so that the service life of the ball bearing can be prolonged. Also, since the number of balls that bear a load can be varied roughly in three steps, the rotating shaft on which the ball bearing is mounted can be stably supported.

In this embodiment also, the rolling elements are provided by two types of balls 3, 4 of different diameters in a ball bearing for use of bearing radial loads. However, in this invention, the rolling elements may be provided by two or more types of balls of different diameters in a ball bearing for use of bearing thrust loads. In this case, needless to say, the first load and the second load, which are critical loads, are thrust loads.

In this invention also, the rolling elements may be provided by two or more types of balls of different diameters in ball bearings for use of bearing combined radial and axial loads, such as angular contact ball bearings which are used for bearing combined radial and axial loads.

In this case, for example, when the rolling elements are provided by two types of balls of different diameters, a first load that is a maximum load to be borne by the larger-diameter balls alone with the smaller-diameter balls in contact with none of inner and outer rings is defined as follows. That is, with the radial load shown along the horizontal axis and the thrust load shown along the vertical axis, the first load is defined as a vector plotted by all points on one continuous curve that is traced on a radial - thrust plane (i.e., a vector composed of two load factors). Similarly, a second load that is a minimum load to be borne by both the first balls and the second balls is also defined as a vector plotted by all points on one continuous curve that is traced on the radial - thrust plane (i.e., a vector composed of two load factors). This is based on the fact that in the case of a rolling bearing which bears thrust and radial loads, the first load and the second load depend on two factors, direction and magnitude of a combined radial and thrust load.

Also in this embodiment, the rolling elements are provided by two types of balls 3, 4 of different diameters in a ball bearing for radial loads. However, in this invention, the rolling elements may also be provided by two or more types of balls of different diameters in ball bearings that can bear moment loads. In this case, the first load and the second load, which are critical loads, are moment loads.

Also in this embodiment, the rolling elements are provided by first balls and second balls smaller in diameter than the first balls in a ball bearing. However, in this invention, the rolling elements may also be provided by a plurality of types of cylindrical rollers having different diameters in a cylindrical roller bearing. Further, in this invention, the rolling elements may also be provided by a plurality of types of tapered rollers having different diameters in a tapered roller bearing.

In addition, with the rolling bearing of this invention used as a wheel bearing for vehicles such as motorcycles and automobiles, and with a setting that a load is to be borne only by the rolling elements of the largest diameter under a condition that the vehicle is situated in a state other than a rapid directional change such as a right turn or a left turn, i.e., in a generally straight-running state of the vehicle, it becomes implementable to reduce the fuel cost of the vehicle to a large extent. As to the reason of this, whereas vehicles under its operating state are mostly in such a generally straight-running state as mentioned above, use of the rolling bearing of the invention allows the rotating torque in the vehicle's generally straight-running state to be reduced to a large extent.

## Claims

1. A rolling bearing comprising:
an outer ring having a raceway surface;
an inner ring having a raceway surface;
first rolling elements which are placed between the raceway surface of the outer ring and the raceway surface of the inner ring and each of which has a first diameter;
second rolling elements which are placed between the raceway surface of the outer ring and the raceway surface of the inner ring and each of which has a second diameter smaller than the first diameter; and
a cage for holding the first rolling elements and the second rolling elements, wherein
under action of a load not more than a first load, the first rolling elements are in contact with both the raceway surface of the outer ring and the raceway surface of the inner ring, while the second rolling elements are separate from both the raceway surface of the outer ring and the raceway surface of the inner ring, and wherein
under action of a load not less than a second load which is larger than the first load, both the first rolling elements and the second rolling elements are in contact with both the raceway surface of the outer ring and the raceway surface of the inner ring.

2. The rolling bearing as claimed in Claim 1, further comprising:
third rolling elements each of which has a third diameter smaller than the second diameter, wherein
the cage holds the third rolling elements, and
the third rolling elements are in contact with both the raceway surface of the outer ring and the raceway surface of the inner ring under action of a load not less than a third load which is larger than the second load, and are not in contact with at least one of the raceway surface of the outer ring and the raceway surface of the inner ring under action of a load smaller than the third load.

3. The rolling bearing as claimed in Claim 1, wherein
the cage holds the first rolling elements and the second rolling elements alternately along a circumferential direction of the cage.
